Europäisches Patentamt

European Patent Office

Office européen des brevets

(19)

(11) **EP 1 117 201 A2**

(12) # EUROPEAN PATENT APPLICATION

(43) Date of publication:
**18.07.2001 Bulletin 2001/29**

(51) Int Cl.$^7$: **H04J 3/06**, H04Q 11/04

(21) Application number: **01100681.4**

(22) Date of filing: **11.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.01.2000 JP 2000004581**

(71) Applicant: **NEC CORPORATION**
**Tokyo (JP)**

(72) Inventor: **Takahashi, Tsugio**
**Minato-ku, Tokyo (JP)**

(74) Representative: **Glawe, Delfs, Moll & Partner**
**Patentanwälte**
**Postfach 26 01 62**
**80058 München (DE)**

(54) **Frame synchronization detecting circuit**

(57)     A frame synchronization detecting circuit is provided which is capable of efficiently reducing power consumption in a hunting state.

The frame synchronization detecting circuit composed of a frame synchronization pattern detecting circuit (41), a receiver frame counter (42) and a state transition judging circuit (43) has an in-house phase frame counter (42) adapted to produce a receiving frame enable signal having a pulse width of "2δ+α" (nsec) in a timing manner that an in-house frame pulse (FP) rises at a midpoint of the pulse width of the receiving frame enable signal. While the frame synchronization detecting circuit is in a hunting state in which a frame synchronization pattern is being sought by the frame synchronization pattern detecting circuit (41), only when the above receiving frame enable signal is in an enable state, a synchronization clock is fed to the frame synchronization pattern detecting circuit (41) and the state transition judging circuit (43).

**FIG.1**

EP 1 117 201 A2

**Description**

BACKGROUND OF THE INVENTION

Field of the Invention

The present invention relates to a frame synchronization detecting circuit and more particularly to the frame synchronization detecting circuit being capable of lowering power consumption.

The present application claims priority of Japanese Patent Application No. 2000-004581 filed on January 13,2000, which is hereby incorporated by reference.

Description of the Related Art

An SDH (Synchronous Digital Hierarchy) technology being a network synchronization method for supplying a synchronized clock in a network required for multiplexing, has been standardized by ITU-T (International Telecommunication Union-Telecommunication), based on a SONET (Synchronous Optical Network) developed as high speed transmission technology using optical fibers. An SDH signal to be sent or received in a transmission system using the SDH technology is frame-structured. To exactly recognize a frame phase and to send or receive a signal in a predetermined format, a fixed frame synchronization pattern is placed at a specified position in a frame-structured signal on a sender side and the frame synchronization pattern is recognized on a receiver side to perform synchronous detection of a frame. A circuit adapted to perform such synchronous detection of the frame is called a frame synchronization detecting circuit.

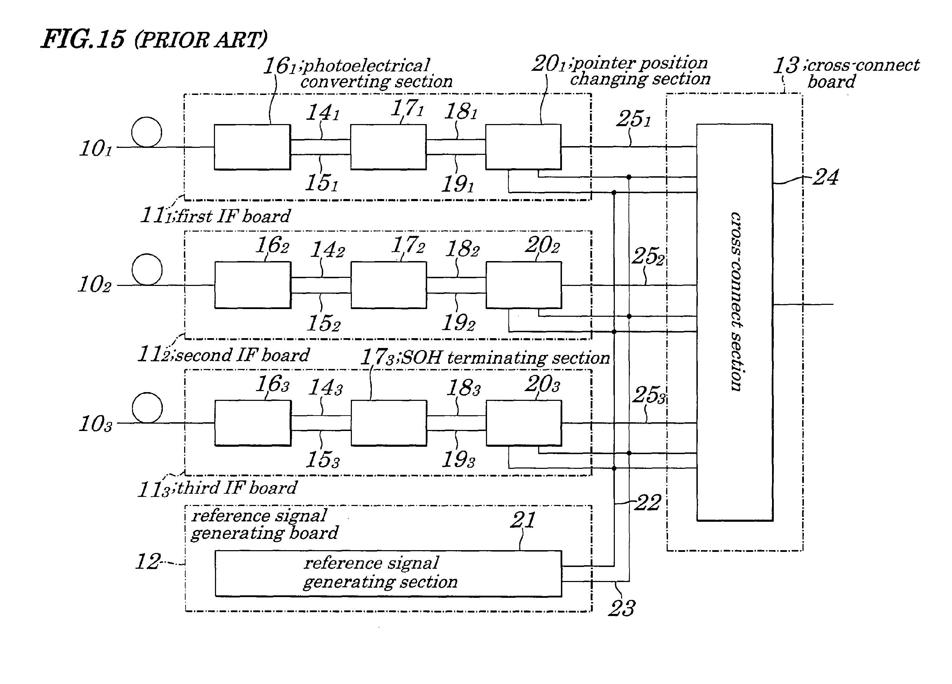

Figure 15 is a schematic block diagram showing configurations of a conventional SDH transmission device in which such the frame synchronization detecting circuit as described above is employed. The SDH transmission device is used to send or receive an SDH signal in such places where a transmission distance is relatively near, for example, between backplanes, shelves, units or like. The conventional SDH transmission device is provided with first to third IF (Interface) boards $11_1$ to $11_3$ each being adapted to send and receive SDH signals through optical fibers $10_1$ to $10_3$ respectively, a reference signal generating board 12 to generate a reference signal required for sending and receiving SDH signals and a cross-connect board 13 adapted to cross-connect a transmission signal fed from each of the IF boards $11_1$ to $11_3$ in synchronization with the reference signal generated by the reference signal generating board 12.

The first IF board $11_1$ is provided with a photoelectric converting section $16_1$ adapted to photoelectrically convert SDH signal being an optical signal which is received at a bit rate of, for example, 10 Gbps through the optical fiber $10_1$ and to extract received data $14_1$ and a clock signal $15_1$ from received SDH signal. The second IF board $11_2$ is provided with a photoelectric converting section $16_2$ adapted to photoelectrically convert SDH signal being an optical signal which is received at a bit rate of, for example, 10 Gbps through the optical fiber $10_2$ and to extract received data $14_2$ and a clock signal $15_2$ from received SDH signal. The third IF board $11_3$ is provided with a photoelectric converting section $16_3$ adapted to photoelectrically convert SDH signal being an optical signal which is received at a bit rate of, for example, 10 Gbps through the optical fiber $10_3$ and to extract received data $14_3$ and a clock signal $15_3$ from received SDH signal. The first IF board $11_1$ is also provided with a section overhead (SOH) terminating section $17_1$ adapted to perform terminating processing on a section overhead portion contained in the SDH signal in accordance with a frame format predetermined based on the received data $14_1$ and clock signal $15_1$. The second IF board $11_2$ is also provided with a SOH terminating section $17_2$ adapted to perform terminating processing on a section overhead portion contained in the SDH signal in accordance with a frame format predetermined based on the received data $14_2$ and clock signal $15_2$. The third IF board $11_3$ is also provided with a SOH terminating section $17_3$ adapted to perform terminating processing on a section overhead portion contained in the SDH signal in accordance with a frame format predetermined based on the received data $14_3$ and clock_signal $15_3$. The first IF board $11_1$ has a pointer position changing section $20_1$ adapted to change a position of a pointer indicating a relationship between phases of frames based on received data $18_1$ and a clock signal $19_1$ terminated by the SOH terminating section $17_1$ and to adjust the relationship between phases in accordance with an in-house frame pulse indicating a head of in-house frame data. The second IF board $11_2$ has a pointer position changing section $20_2$ adapted to change a position of a pointer indicating a relationship between phases of frames based on received_data $18_2$ and a clock signal $19_2$ terminated by the SOH terminating section $17_2$ and to adjust the relationship between phases in accordance with an in-house frame pulse indicating a head of in-house frame data. The third IF board $11_3$ has a pointer position changing section $20_3$ adapted to change a position of a pointer indicating a relationship between phases of frames based on received data $18_3$ and a clock signal $19_3$ terminated by the SOH terminating section $17_3$ and to adjust the relationship between phases in accordance with an in-house frame pulse indicating a head of in-house frame data.

The reference signal generating board 12 has a reference signal generating section 21 adapted to generate an in-house clock 22 to be used as an in-house reference signal and an in-house frame pulse (FP) 23 indicating a head of the in-house frame data and to feed them to each of the pointer position changing sections $20_1$ to $20_3$ and the cross-connect board 13. The cross-connect board 13 has a cross-connect section 24 to perform switching of cross-connection of received data output from each of the IF boards $11_1$ to $11_3$.

The first to third IF boards $11_1$ to $11_3$, reference signal generating board 12 and cross-connect board 13 are all board modules and are connected to each other using bus signal lines. Each of the first to third IF boards $11_1$ to $11_3$ receives SDH signals at a bit rate of 10 Gbps through one optical fiber and outputs data at a bit rate of 600 Mbps through 16 optical fibers to the cross-connect board 13. When a clock signal is received individually on a receiver side, since a deviation caused by signal delay cannot be disregarded, each of data signals $25_1$ to $25_3$ each being composed of each of received data $18_1$ to $18_3$ containing each of the clock signal $19_1$ to $19_3$ is output and each of the clock signal $19_1$ to $19_3$ is extracted in the cross-connect section 24 on the receiver side.

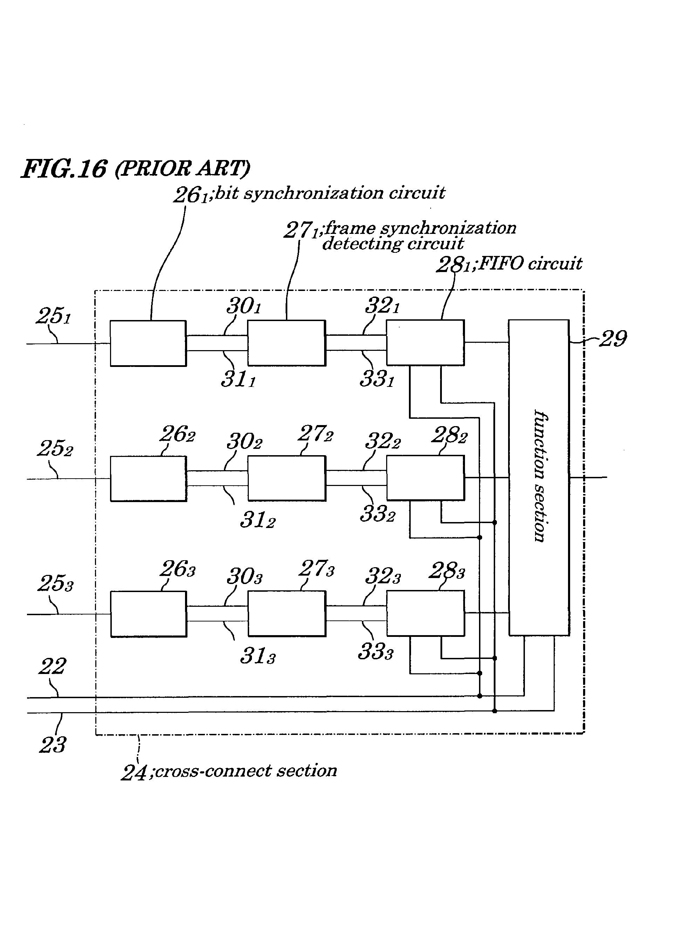

Figure 16 is a schematic block diagram showing configurations of main parts of the cross-connect section 24 employed in the conventional SDH transmission device. The cross-connect section 24 is provided with bit synchronization circuits $26_1$ to $26_3$ each corresponding to each of the IF boards $11_1$ to $11_3$, frame synchronization detecting circuits $27_1$ to $27_3$ each corresponding to each of the bit synchronization circuits $26_1$ to $26_3$ and FIFO (First-In First-Out) circuits $28_1$ to $28_3$ each corresponding to each of the frame synchronization detecting circuits $27_1$ to $27_3$. Moreover, the cross-connect section 24 has a function section 29 adapted to perform switching of cross-connection of data read from the FIFO circuits $28_1$ to $28_3$.

Each of the data signals $25_1$ to $25_3$ output from the pointer position changing sections $20_1$ to $20_3$ of the IF boards $11_1$ to $11_3$ contains a clock signal component, as described above. Therefore, each of the bit synchronization circuits $26_1$ to $26_3$, using a clock signal extracting circuit (not shown) composed of a resonance circuit having a resonance frequency preset to be equal to that of a predetermined clock signal, extracts each of data signals $30_1$ to $30_3$ and each of clock signals $31_1$ to $31_3$ from each of the received data signals $25_1$ to $25_3$.

Each of the frame synchronization detecting circuits $27_1$ to $27_3$, by using each of the clock signals $31_1$ to $31_3$ extracted by the bit synchronization circuits $26_1$ to $26_3$, detects a fixed frame synchronization pattern contained in bit-synchronized data signals $30_1$ to $30_3$ and performs frame synchronization in accordance with the detected frame synchronization pattern. Each of frame-synchronized data signals $32_1$ to $32_3$ and each of clock signals $33_1$ to $33_2$ which is same as each of the clock signals $31_1$ to $31_3$ extracted by the bit synchronization circuits $26_1$ to $26_3$, are fed respectively to each of the FIFO circuits $28_1$ to $28_3$.

Each of the data signals $32_1$ to $32_3$ which is frame-synchronized by the frame synchronization detecting circuits $27_1$ to $27_3$ is written in the FIFO circuits $28_1$ to $28_3$, in synchronization with each of the clock signals $33_1$ to $33_3$. To the FIFO circuits $28_1$ to $28_3$ are supplied the in-house clock 22 and in-house FP 23 generated by the reference signal generating board 12 and, data written in each of the FIFO circuits $28_1$ to $28_3$ being contained in a frame specified by the in-house FP 23 is sequentially read in synchronization with the in-house clock 22.

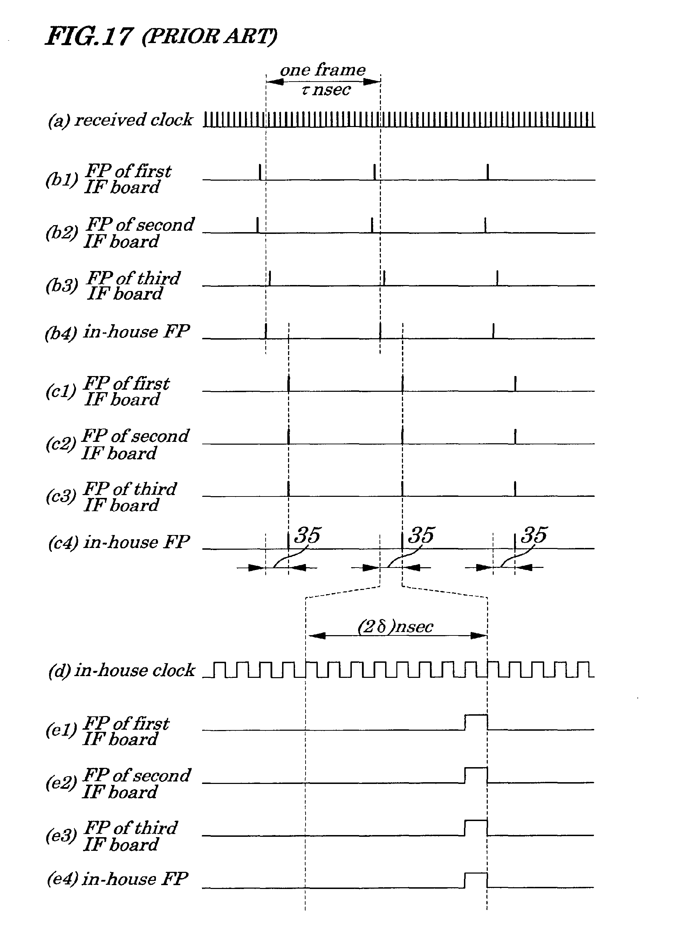

Figure 17 is a diagram showing an operating timing of an SDH transmission signal in the conventional SDH transmission device. Figure 17 (a) shows an operating timing of a received clock extracted from data received by the first to third IF boards $11_1$ to $11_3$. Figure 17 (b1) to (b4) show a relationship between the FP phases at a time when data received through each of the first to third IF boards $11_1$ to $11_3$ is written in each of the FIFO circuits $28_1$ to $28_3$. Figure 17 (c1) to (c4) show a relationship between the FP phases at a time when the data is read from each of the FIFO circuits $28_1$ to $28_3$. Figure 17 (d) shows an enlarged view of an operating timing of the in-house clock 22 during a period indicating a phase range 35 absorbed by each of the FIFO circuits $28_1$ to $28_3$. Figure 17 (e1) to (e4) show an enlarged view of each of the FP phases of each of the IF boards $11_1$ to $11_3$ during the period indicating the phase range 35 absorbed by each of the FIFO circuits $28_1$ to 283. That is, a deviation occurs in phases not only between data received through each of the IF boards $11_1$ to $11_3$ shown in Fig. 17 (b1) to (b3) and the received clock shown in Fig. 17 (a) but also between data received through each of the IF boards $11_1$ to $11_3$ and the in-house FP 23 generated by the reference signal generating board 12 shown in Fig. 17 (b4). Phase deviation is due to variations in time required for a phase of the FP to reach the cross-connect board 13 caused by differences in physical transmission distances and/or differences in circuit configurations in each of the IF boards $11_1$ to $11_3$. To solve this problem, the conventional SDH transmission device, as shown in Fig. 17 (c1) to (c4), performs adjustment of a phase difference in data received through each of the IF boards $11_1$ to $11_3$, by reading data from each of the FIFO circuits $28_1$ to $28_3$, in synchronization with the in-house clock 22 signal generated by the reference signal generating board 12 immediately before the cross-connect section 24 carries out switching of cross-connection of the data and after having detected the synchronization of frames by using the frame synchronization detecting circuits $27_1$ to $27_3$ to detect a phase of frames. As a result, during the period of "2 δ " (nsec) indicating a range 35 of a phase absorbed by the FIFO circuit $28_1$ to $28_3$, in a state where data received through each of the IF boards $11_1$ to $11_3$ is completely in phase with the in-house FP 23 generated by the reference signal generating board 12, the switching of cross-connection of the data can be made.

By an improved processing capability of large-scale integrated (LSI) communication devices implemented by recent advancement in integration technology and by advanced communication technology, it is made possible to capture two or more SDH signals using one LSI and to perform processing greatly increased amounts of communication data. For example, by using one LSI communication device, processing of 50 channels or more of synchronous transport signals (STS) can be performed at a bit rate of 622 Mbps. However, when a plurality of channels of SDH signals is processed, a plurality of frame synchronization detecting circuits described above that can correspond to the two or more channels is required, thus making it indispensable to lower power consumption of the frame synchronization detecting circuit.

In Japanese Patent Application Laid-open No. Sho 63-110840, a frame synchronization detecting circuit attempting to reduce power consumption is disclosed, in which, by detecting synchronization of frames after having converted received serial data to parallel data, the frame synchronization detecting circuit can be operated at a frequency having a value obtained by 1 (one) by a number of pieces of parallel data, thereby allowing power consumption to be reduced.

Another example of a frame synchronization detecting circuit attempting to reduce power consumption is one which attempts to lower power consumption by stopping a supply of a clock signal in the frame synchronization detecting circuit until detection timing for synchronization of a subsequent frame based on a fact that, once timing for synchronization of a frame is detected, detection timing of synchronization of the subsequent frame can be exactly predicted.

However, such conventional frame synchronization detecting circuits as described above have problems in that, though power consumption in the frame synchronization detecting circuit itself can be reduced to some extent, the detecting circuit operates at all the time even in a hunting state in which a frame synchronization pattern is being sought and power consumption in such the hunting state is great.

Generally, the frame synchronization detecting circuit, so long as it is operated in a normal state, remains short in the hunting state and moves to a synchronization state, a ratio of power consumption in the hunting state to the power consumption of an entire detecting circuit presents no problem. However, if the hunting state continues long at a time of a failure of breakage of the detecting circuit, the hunting state caused by the failure occurs in a plurality of channels in some cases. In such cases, power consumption in the hunting state becomes great, causing a overheating problem of LSI chips which leads to a decrease in reliability of product. Therefore, the frame synchronization detecting circuit has to be so configured that power consumption would not become great even when the hunting state continues in all channels in order to prevent the overheating problem of LSI chips.

SUMMARY OF THE INVENTION

In view of the above, it is an object of the present invention to provide a frame synchronization detecting circuit being capable of reducing power consumption in a hunting state.

According to a first aspect of the present invention, there is provided a frame synchronization detecting circuit including:

a frame synchronization pattern detecting circuit for detecting, with specified timing, a predetermined frame synchronization pattern contained in received data having a frame structure;

a hunting state judging circuit for judging whether the frame synchronization detecting circuit is in a hunting state in which the frame synchronization pattern is being sought, based on a detection result obtained by the frame synchronization pattern detecting circuit; and

a timing stopping circuit for stopping the timing of detecting the frame synchronization pattern only for a specified period of time before and after a frame pulse is generated which indicates a head of a frame containing the received data when the frame synchronization detecting circuit is judged to be in the hunting state by the hunting state judging circuit.

With the above first aspect, since the frame synchronization detecting circuit is allowed to operate only for the period of "$2\delta + \alpha$" (nsec) while the frame synchronization detecting circuit is in the hunting state, if one frame period is given as "$\tau$", a ratio of an operation period of the frame synchronization detecting circuit to the one frame period can be expressed as "$(2\delta + \alpha) / \tau$". In a case of an LSI manufactured by a CMOS process in particular, since power consumption in the LSI is proportional to an operation frequency, it is possible, in the hunting state, to reduce power consumption to "$(2\delta + \alpha) / \tau$".

In the foregoing, a preferable mode is one that wherein includes a resetting circuit for resetting frame synchronization detecting operations to be performed by the frame synchronization pattern detecting circuit and the hunting state judging circuit at a time other than the specified period of time before and after the frame pulse is generated when the frame synchronization detecting circuit is judged to be in the hunting state by the hunting state judging circuit.

With the above preferable mode, since such troubles as a deadlock caused by malfunctions due to noise or a like can be prevented even if supply of a clock is stopped in the frame synchronization detecting circuit, power consumption in the hunting state can be reduced efficiently and without any problem.

Also, another preferable mode is one wherein the stopping by the timing stopping circuit and the resetting by the resetting circuit are performed with different timing.

With another preferable mode, stable detection of frame synchronization can be performed since initialization is carried out after the supply of a clock has been started and prompt detection of the frame synchronization is possible since the supply of a clock is started after a reset has been cancelled.

According to a second aspect of the present invention, there is provided a frame synchronization detecting circuit including:

a frame synchronization pattern detecting circuit for detecting a predetermined frame synchronization pattern contained in received data having a frame structure;

a hunting state judging circuit for judging whether the frame synchronization detecting circuit is in a hunting state in which the frame synchronization pattern is being sought, based on a detection result obtained by the frame synchronization pattern detecting circuit; and

a received data fixing circuit for making the received data fixed only for a specified period of time before and after a frame pulse is generated which indicates a head of a frame containing the received data when the frame synchronization detecting circuit is judged to be in the hunting state by the hunting state judging circuit.

With the above second aspect, power consumption in combined circuits employed in the frame synchronization detecting circuit can be reduced to almost "0" (zero) and it is possible to simplify a verification of timing in a circuit design process and/or a layout verifying process, to reduce time required for the verification of timing and to improve verification accuracy.

According to a third aspect of the present invention, there is provided a frame synchronization detecting circuit including:

a frame synchronization pattern detecting circuit for detecting a predetermined frame synchronization pattern contained in received data having a frame structure;

a hunting state judging circuit for judging whether the frame synchronization detecting circuit is in a hunting state in which the frame synchronization pattern is being sought, based on a detection result obtained by the frame synchronization pattern detecting circuit; and

a resetting circuit for resetting frame synchronization detecting operations to be performed by the frame synchronization pattern detecting circuit and the hunting state judging circuit at a time other than a specified period of time before and after a frame pulse is generated when the frame synchronization detecting circuit is judged to be in the hunting state by the hunting state judging circuit.

With the above third aspect, power consumption in combined circuits employed in the frame synchronization detecting circuit can be reduced to almost "0" (zero) and it is possible to simplify a verification of timing in a circuit design process and/or a layout verifying process, to reduce time required for the verification of timing and to improve verification accuracy.

According to a fourth aspect of the present invention, there is provided a frame synchronization detecting circuit including:

a frame synchronization pattern detecting circuit for detecting a predetermined frame synchronization pattern contained in received data having a frame structure;

a hunting state judging circuit for judging whether the frame synchronization detecting circuit is in a hunting state in which the predetermined frame synchronization pattern is being sought, based on a detection result obtained by the frame synchronization pattern detecting circuit; and

a circuit stop controlling unit for stopping an operation of a circuit connected to a front stage only for a specified period of time before and after a frame pulse is generated when the frame synchronization detecting circuit is judged to be in the hunting state by the hunting state judging circuit.

With the above fourth aspect, since operations of the circuit connected to the front stage are stopped, power consumption in combined circuit sections in the frame synchronization detecting circuit can be reduced to almost "0" (zero).

In the forgoing, a preferable mode is one wherein the circuit stop controlling unit, when canceling a stop of operations of the circuit, cancels the stop of operations of the circuit connected to the front stage after it has canceled a stop of timing of frame synchronization detection operations.

With the above preferable mode, since the stop of operations of the circuit connected to the front stage is cancelled after the timing operations of the frame synchronization detection has been cancelled, a clock signal becoming weak immediately after the clock signal has risen can be removed, which assures an stable operation.

According to a fifth aspect of the present invention, there is provided a frame synchronization detecting circuit including:

a frame synchronization pattern detecting circuit for detecting a predetermined frame synchronization pattern contained in received data having a frame structure;

a hunting state judging circuit for judging whether the frame synchronization detecting circuit is in a hunting state in which the frame synchronization pattern is being sought, based on a detection result obtained by the frame synchronization pattern detecting circuit; and

a circuit operation stopping unit for stopping operations of, at least, a part of the frame synchronization detecting circuit only for a specified period of time before and after a frame pulse is generated which indicates a head of a frame containing the received data when the frame synchronization detecting circuit is judged to be in the hunting state by the hunting state judging circuit.

With the above fifth aspect, since clock operations are properly controlled, power consumption in the hunting state can be lowered.

BRIEF DESCRIPTION OF THE DRAWINGS

The above and other objects, advantages and features of the present invention will be more apparent from the following description taken in conjunction with the accompanying drawings in which:

Fig. 1 is a schematic block diagram showing configurations of a frame synchronization detecting circuit according to a first embodiment of the present invention;

Fig. 2 is a schematic block diagram showing configurations of main parts of a frame synchronization pattern detecting circuit employed in the frame synchronization detecting circuit according to the first embodiment of the present invention;

Fig. 3 is a diagram explaining outlines of a state transition diagram used to judge a state by a state transition judging circuit according to the first embodiment of the present invention;

Fig. 4 is a schematic block diagram showing configurations of main parts of an in-house phase frame counter shown in Fig. 1;

Fig. 5 is a diagram showing an operating timing in a hunting state of the frame synchronization detecting circuit according to the first embodiment of the present invention;

Fig. 6 is a diagram showing an operating timing of a transition from a hunting state to a synchronization state in the frame synchronization detecting circuit according to the first embodiment of the present invention;

Fig. 7 is a diagram showing an operating timing of a transition from a synchronization state to a hunting state in the frame synchronization detecting circuit according to the first embodiment of the present invention;

Fig. 8 is a schematic block diagram showing configurations of a frame synchronization detecting circuit according to a second embodiment of the present invention;

Fig. 9 is a schematic block diagram showing configurations of a frame synchronization detecting circuit according to a third embodiment of the present invention;

Fig. 10 is a diagram showing an operating timing in a case where a reset period is provided within a clock stopping period in a hunting state in the frame synchronization detecting circuit according to the third embodiment of the present invention;

Fig. 11 is a diagram showing an operating timing in a case where a clock stopping period is provided within a reset period in a hunting state in the frame synchronization detecting circuit according to the third embodiment of the present invention;

Fig. 12 is a schematic block diagram showing configurations of a frame synchronization detecting circuit according to a fourth embodiment of the present invention;

Fig. 13 is a schematic block diagram showing configurations of a frame synchronization detecting circuit according to a fifth embodiment of the present invention;

Fig. 14 is a schematic block diagram showing configurations of a frame synchronization detecting system in which a frame synchronization detecting circuit of a sixth embodiment of the present invention is employed;

Fig. 15 is a schematic block diagram showing configurations of an SDH transmission device in which a conventional frame synchronization detecting circuit is employed;

Fig. 16 is a schematic block diagram showing configurations of main parts of a cross-connect section employed in the SDH transmission device of Fig. 15; and

Fig. 17 is a diagram showing operating timing of an SDH transmission signal in the conventional SDH transmission device of Fig. 15.

DETAILED DESCRIPTION OF THE PREFERRED EMBODIMENTS

Best modes of carrying out the present invention will be described in further detail using various embodiments with reference to the accompanying drawings.

First Embodiment

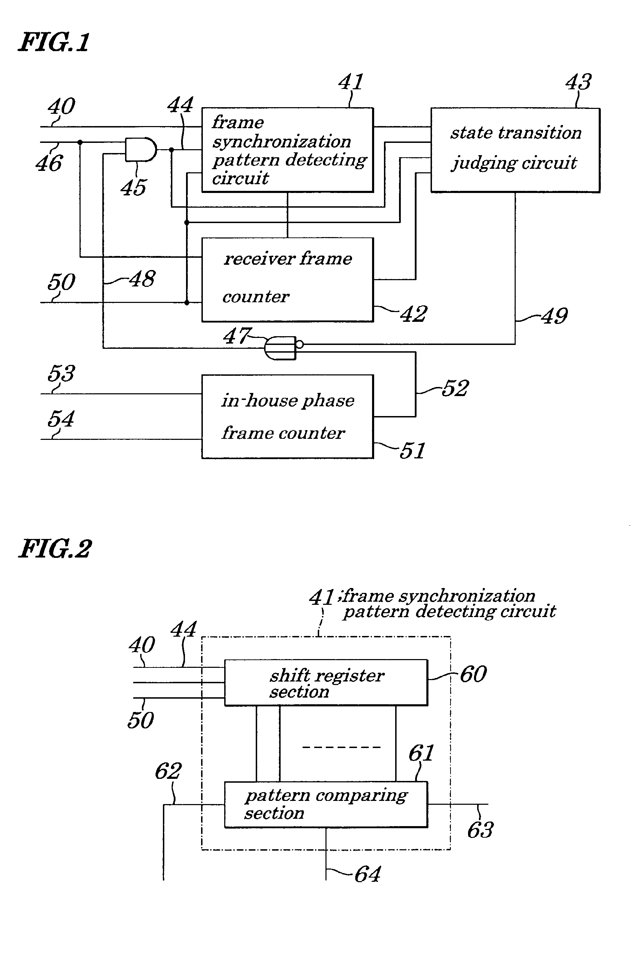

Figure 1 is a schematic block diagram showing configurations of a frame synchronization detecting circuit according to a first embodiment of the present invention. The frame synchronization detecting circuit of the first embodiment is provided with a frame synchronization pattern detecting circuit 41 adapted to detect a predetermined frame synchronization pattern contained in a received data 40, a receiver frame counter 42 adapted, by being triggered by detection of the frame synchronization pattern performed by the frame synchronization pattern detecting circuit 41 and from then on, counts predetermined frame periods and a state transition judging circuit 43 adapted to judge whether a predetermined state transition occurs or not in accordance with the detection of frame synchronization performed by the frame synchronization pattern detecting circuit 41 in synchronization with timing of frame periods counted by the receiver frame counter 42.

The frame synchronization pattern detecting circuit 41 receives a synchronization clock 44 in synchronization with which a predetermined frame synchronization pattern is contained in received data 40 is detected. The synchronization clock 44 is a clock obtained by computing an AND of a received clock 46 extracted by a first gate 45 as a clock signal component contained in the received data 40 with an output signal 48 from a second gate 47.

The receiver frame counter 42, by being triggered by detection of frame synchronization pattern performed by the frame synchronization pattern detecting circuit 41 and in synchronization with the received clock 46, counts, from then on, a predetermined frame period cyclically and produces a frame timing signal to be fed to both the frame synchronization pattern detecting circuit 41 and the state transition judging circuit 43. The state transition judging circuit 43 causes the frame synchronization detecting circuit to make a state transition in accordance with a state transition diagram predetermined depending on a frame synchronization detecting state detected by the frame synchronization pattern detecting circuit 41 in synchronization with the synchronization clock 44 and, when the frame synchronization detecting circuit is placed in a predetermined hunting state, outputs a hunting state signal 49 to the second gate 47. Moreover, a state signal indicating each state produced in state transition is fed, as appropriate, to the frame synchronization pattern detecting circuit 41 or the receiver frame counter 42. The frame synchronization pattern detecting circuit 41, the receiver frame counter 42 and the state transition judging circuit 43 are initialized by a reset signal 50.

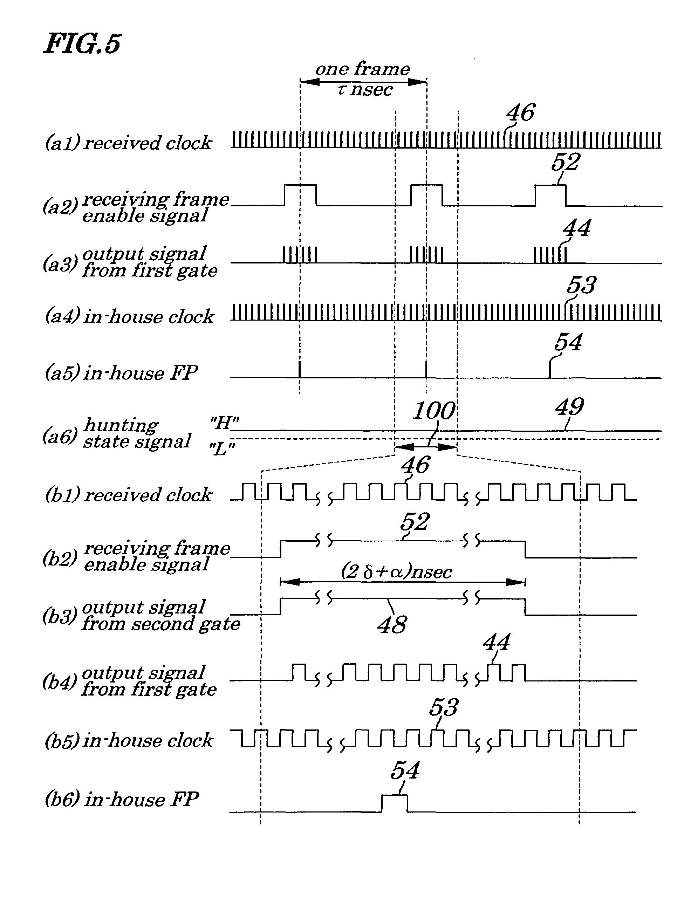

The frame synchronization pattern detecting circuit 41 of the first embodiment is also provided with an in-house phase frame counter 51 adapted to output a receiving frame enable signal 52. To the in-house phase frame counter 51 are input an in-house clock 53 being produced which serves as an operating reference clock and an in-house FP 54 indicating a head of a frame to be transmitted and, insynchronizationwiththe in-house clock 53, receiving frame enable signal 52 having a pulse width of "2 $\delta$ + $\alpha$" (nsec) is produced by the in-house phase frame counter 51 in a timing manner that the in-house FP 54 rises at a midpoint of pulse width of the receiving frame enable signal 52 (see Fig. 5). The "$\delta$" represents a value determined with consideration given to delay variation amounts in a device system as an object, for which, for example, time required for operations in the frame synchronization detecting circuit or time indicating a range of_absorption of delay variation amounts by a FIFO circuit used for adjustment of a phase being connected at a back stage of the frame synchronization detecting circuit, whichever is longer, is selected. The "$\alpha$" represents a margin to be decided with consideration given to circuit accuracy and/or amounts of delay variations within a device as an object.

The second gate 47 generates output signal 48 obtained by computing an OR of the receiving frame enable signal 52 with a NOT of the hunting state signal 49 output by the state transition judging circuit 43. Even when the hunting state signal 49 is high, during period of "2 $\delta$ + $\alpha$" (nsec), that is, while the receiving frame enable signal 52 is in an enable state, since the output signal 48 output by the second gate 47 is supplied as a signal at logical "H" to the first gate 45, the received clock 46 is supplied, as it is, to the frame synchronization pattern detecting circuit 41 and to the state transition judging circuit 43. Moreover, even when the hunting state signal 49 is not high and even when the receiving frame enable signal 52 is in a disable state, since the output signal 48 output by the second gate 47 is supplied as a signal at logical "H" to the first gate 45, the received clock 46 is supplied, as it is, to the frame synchronization pattern detecting circuit 41 and the state transition judging circuit 43. On the other hand, while the hunting state signal 49 is high, that is, the frame synchronization detecting circuit is in hunting state and while the receiving frame enable signal 52 is in a disable state, since the output signal 48 output by the second gate 47 is supplied as a signal at logical "L" to the first gate 45, the received clock 46 is not supplied to the frame synchronization detecting pattern circuit 41 and the state transition judging circuit 43, causing the frame synchronization detecting circuit to be placed in a stop state. Even if the frame synchronization detecting circuit is placed in stop state in response to the receiving frame enable signal 52, as shown in Fig. 15, since a phase is adjusted, to some extent, in accordance with the in-house FP 54 in a pointer position changing section (not shown) of each of IF boards (not shown), the frame synchronization pattern detecting circuit 41 cane operate without any difficulty.

Next, main parts of the frame synchronization detecting circuit according to the first embodiment are described.

Figure 2 is a schematic block diagram showing configurations of main parts of the frame synchronization pattern detecting circuit 41 employed in the frame synchronization detecting circuit according to the first embodiment. The frame synchronization pattern detecting circuit 41 is composed of a shift register section 60 and a pattern comparing section 61. The shift register section 60 shifts the received data 40 which is input as serial data, in step of one bit, in synchronization with the synchronization clock 44 and outputs each piece of bit data to the pattern comparing section 61. In the shift register section 60, data internally held is initializedbythe reset signal 50. The pattern comparing section 61 holds a predetermined frame synchronization pattern and compares the held frame synchronization pattern with parallel data which has been shiftedby the shift register section 60 in synchronization with the synchronization clock 44, in step of one bit. The pattern comparing section 61 compares, every time it receives a frame timing signal 62 generated by the receiver frame counter 42 (Fig. 1), the parallel data to be fed from the shift register section 60 with predetermined frame synchronization pattern. A comparison result is output, as synchronization pattern detecting signals 63 and 64, to the state transition judging circuit 43 (Fig. 1) and the receiver frame counter 42 respectively.

The receiver frame counter 42 outputs, in its initial state, a synchronization pattern detection timing signal to the frame synchronization pattern detecting circuit 41. Once a synchronization pattern is detected by synchronization pattern detecting signal being output by the frame synchronization pattern detecting circuit 41, the receiver frame counter 42, from then on, counts predetermined frame periods in synchronization with the received clock 46 (Fig. 1) and outputs the frame timing signal 62, at every time of counting the frame period, to the frame synchronization pattern detecting circuit 41 and the state transition judging circuit 43.

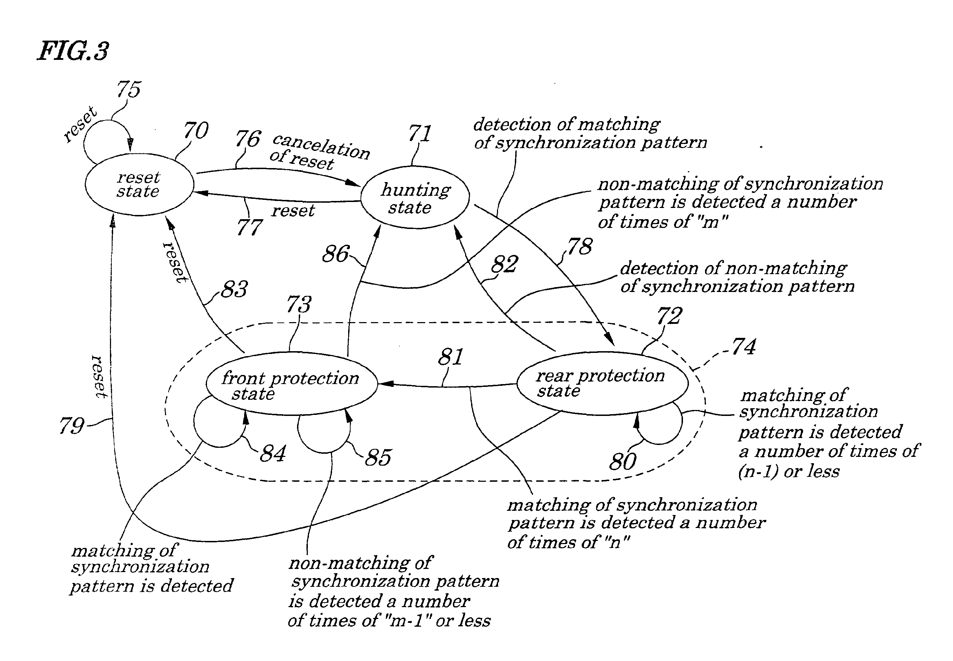

Figure 3 shows outlines of a state transition diagram used to judge a state of the frame synchronization detecting circuit by the state transition judging circuit 43 according to the first embodiment of the present invention. In the state transition diagram, a reset state 70, a hunting state 71, a rear protection state 72 and a front protection state 73 are included, in which a transition is made among states in synchronization with the synchronization clock 44 and with timing specified by a frame timing signal in response to synchronization pattern detecting signal detected by the frame synchronization pattern detecting circuit 41 and a reset signal 50. The hunting state 71 is a state in which a frame synchronization pattern is being sought. The rear protection state 72 and the front protection state 73 are synchronized states 74 in which the frame synchronization pattern has been sought.

In the reset state 70, when the reset signal 50 is input, a state remains in a reset state, that is, no transition is made (as shown by an arrow 75 in Fig. 3) and when the reset signal 50 is cancelled, a transition to the hunting state 71 is made in synchronization with the synchronization clock 44 and with timing specified by the frame timing signal (as shown by an arrow 76 in Fig. 3).

In the hunting state 71, when the reset signal 50 is input, a transition to the reset state 70 is made (as shown by an arrow 77 in Fig. 3) and, when a synchronization pattern is detected by the synchronization pattern detecting signal 63 output by the frame synchronization pattern detecting circuit 41, a transition to the rear protection state 72 is made (as shown by an arrow 78 in Fig. 3).

In the rear protection state 72, when the reset signal 50 is input, a transition to the reset state 70 is made (as shown by an arrow 79 in Fig. 3) and, when matching of the synchronization pattern is consecutively detected a specified number of times of (n-1) or less by the synchronization pattern detecting signal 63 output by the frame synchronization pattern detecting circuit 41, no transition is made (as shown by an arrow 80 in Fig. 3) and, when the matching of the synchronization pattern is detected a number of times of "n", a transition to the front protection state 73 is made (as shown by an arrow 81 in Fig. 3). Moreover, in the rear protection state 72, if non-matching of the synchronization pattern is detected by the synchronization pattern detecting signal 63 output by the frame synchronization pattern detecting circuit 41, a transition to the hunting state 71 is made (as shown by an arrow 82 in Fig. 3).

In the front protection state 73, when the reset signal 50 is input, a transition to the reset state 70 is made (as shown by an arrow 83 in Fig. 3), and when matching of the synchronization pattern is detected by the synchronization pattern detecting signal 63 output by the frame synchronization pattern detecting circuit 41, or when non-matching of the synchronization pattern is detected a specified number of times of (m-1) or less, no transition is made (as shown by arrows 84 and 85 in Fig. 3). However, non-matching of the synchronization pattern is consecutively detected a number of times of "m", a transition to the hunting state 71 is made (as shown by an arrow 86 in Fig. 3).

The state transition judging circuit 43 to judge such state transition as described above outputs a hunting state signal 49, while a transition to the hunting state 71 is being made.

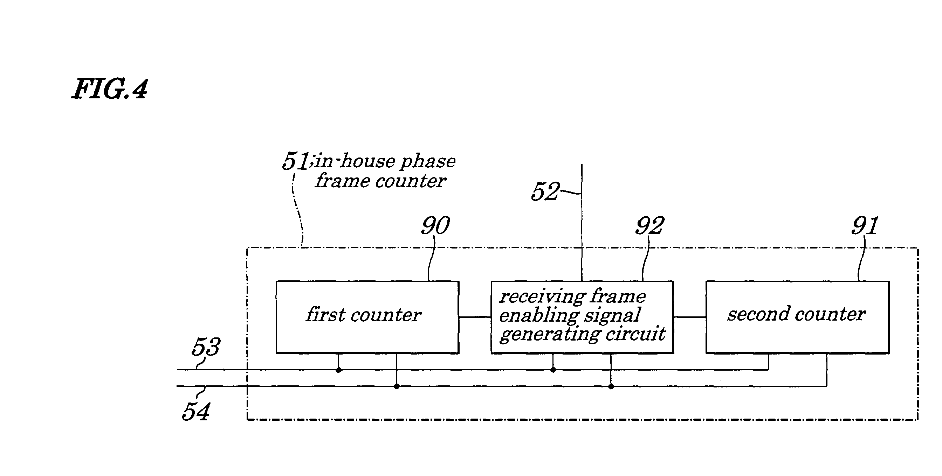

Figure 4 is a schematic block diagram showing configurations of main parts of the in-house phase frame counter 51 shown in Fig. 1. The in-house phase frame counter 51 is provided with a first counter 90, a second counter 91 and a receiving frame enabling signal generating circuit 92. The first counter 90 counts only for a period of time of

"$\delta + \alpha_1$" (nsec) following a rising edge or a trailing edge, in synchronization with the in-house clock 53. The second counter 91 counts only for a period of time of "$\tau$ - ($\delta + \alpha_2$)" (nsec) following a rising edge or a trailing edge, in synchronization with the in-house clock 53. The "$\tau$" represents a period (nsec) of one frame. A sum of "$\alpha_1$" and "$\alpha_2$" becomes "$\alpha$". The receiving frame enabling signal generating circuit 92, after the period of time of "$\delta + \alpha_1$" (nsec) following the rising edge or the trailing edge of the in-house FP 54 for which the first counter 90 counts, has elapsed, causes the receiving frame enable signal 52 to be at logical "L" and, after the period of time of "$\delta + \alpha_2$" (nsec) following the rising edge or the trailing edge of the in-house FP 54 for which the second counter 91 counts, has elapsed, causes the receiving frame enable signal 52 to be at logical "H".

Next, an operating timing of the frame synchronization detecting circuit having such configurations as above is described.

Figure 5 is a diagram showing an operating timing in a hunting state 71 of the frame synchronization detecting circuit according to the first embodiment. Figure 5 (a1) shows an operating timing of the received clock 46. Figure 5 (a2) shows an operating timing of the receiving frame enable signal 52. Figure 5 (a3) shows an operating timing of the synchronization clock 44 being the output signal from the first gate 45. Figure 5 (a4) shows an operating timing of the in-house clock 53. Figure 5 (a5) shows an operating timing of the in-house FP 54. Figure 5 (a6) shows an operating timing of the hunting state signal 49.

Figure 5 (b1) shows an enlarged view of the operating timing of the received clock 46 during a period 100. Figure 5 (b2) shows an enlarged view of the operating timing of the receiving frame enable signal 52 during the period 100. Figure 5 (b3) shows an enlarged view of the operating timing of the output signal 48 output by the second gate 47 during the period 100. Figure 5 (b4) shows an enlarged view of the operating timing of the synchronization clock 44 of the first gate 45 during the period 100. Figure 5 (b5) shows an enlarged view of the operating timing of the in-house clock 53 during the period 100. Figure 5 (b6) shows an enlarged view of the operating timing of the in-house FP 54 during the period 100.

That is, while the received clock 46 is input as shown in Fig. 5 (a1) and the in-house clock 53 and the in-house FP 54 are being produced with timing shown in Fig. 5 (a4) and in Fig. 5 (a5), the in-house phase frame counter 51 produces the receiving frame enable signal 52 having a pulse width of "$2\delta + \alpha$" (nsec) in a timing manner that the in-house FP 54 rises at a midpoint of pulse width of the receiving frame enable signal 52 as shown in Fig. 5 (a2). Since the hunting state signal 49 is high during the period 100 as shown in Fig. 5 (a6), the output signal 48 from the second gate 47 is output with the timing shown in Fig. 5(b3). Therefore, only when the output signal 48 is at logical "H", the synchronization clock 44 being an output signal of the first gate 45 is fed to the frame synchronization pattern detecting circuit 41 and the state transition judging circuit 43, as shown in Fig. 3 (a3) and Fig. 3 (b4). As a result, the frame synchronization pattern detecting circuit 41, if it is in a hunting state 71, that is, the hunting state signal 49 is high, operates only when the receiving frame enable signal 52 is at logical "H".

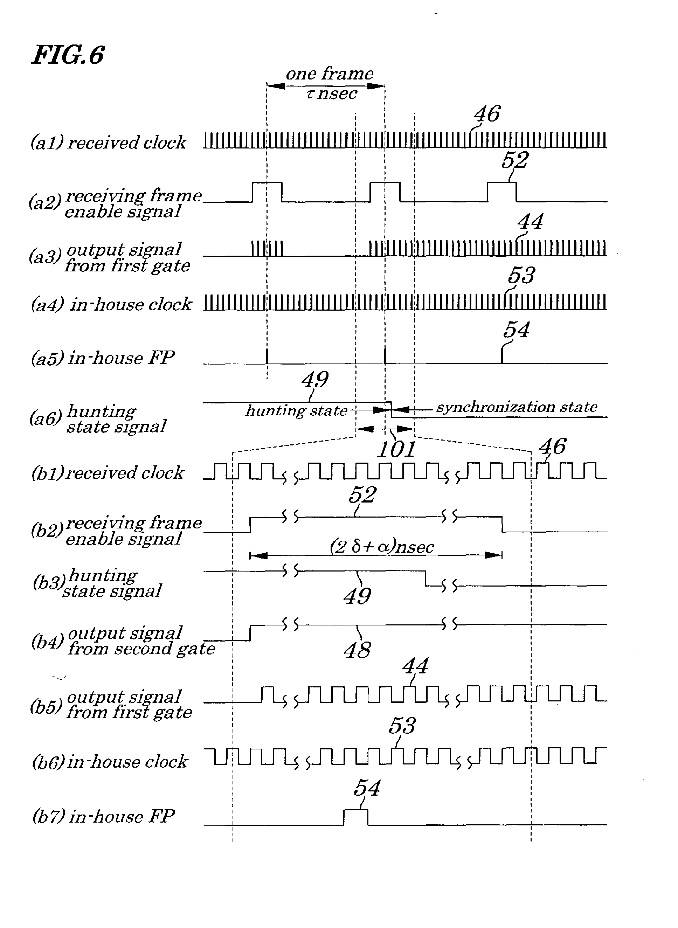

Figure 6 is a diagram showing an operating timing of a transition from the hunting state 71 to the synchronization state in the frame synchronization detecting circuit according to the first embodiment. Figure 6 (a1) shows an operating timing of the received clock 46. Figure 6 (a2) shows an operating timing of the receiving frame enable signal 52. Figure 6 (a3) shows an operating timing of the synchronization clock 44 which is an output signal from the first gate 45. Figure 6 (a4) shows an operating timing of the in-house clock 53. Figure 6 (a5) shows an operating timing of the in-house FP 54. Figure 6 (a6) shows an operating timing of the hunting state signal 49. Figure 6 (b1) shows an enlarged view of an operating timing of the received clock 46 during a period 101. Figure 6 (b1) shows an enlarged view of an operating timing of the receiving frame enable signal 52 during the period 101. Figure 6 (b3) shows an enlarged view of an operating timing of the hunting state signal 49 during the period 101. Figure 6 (b4) shows an enlarged view of an operating timing of the output signal 48 from the second gate 47 during the period 101. Figure 6 (b5) shows an enlarged view of an operating timing of the synchronization clock 44 from the first gate 45 during the period 101. Figure 6 (b6) shows an enlarged view of an operating timing of the in-house clock 53 during the period 101. Figure 6 (b7) shows an enlarged view of an operating timing of the in-house FP 54 during the period 101.

That is, while the received clock 46 is input as shown in Fig. 6 (a1) and the in-house clock 53 and the in-house FP 54 are being produced with the timing shown in Fig. 6 (a4) and in Fig. 6 (a5), the in-house phase frame counter 51 produces the receiving frame enable signal 52 having a pulse width of "$2\delta + \alpha$" (nsec) in a timing manner that the in-house FP 54 rises at a midpoint of pulse width of the receiving frame enable signal 52 as shown in Fig. 6 (a2). During the period 101 shown in Fig. 6 (a6) and (b3), since the hunting state signal 49 causes the frame synchronization detecting circuit to make a transition from the hunting state 71 to the synchronization state, the output signal 48 from the second gate 47 is output with timing shown in Fig. 6 (b4). Therefore, while the output signal 48 is at logical "H", the synchronization clock 44 being an output signal from the first gate 45 is fed to the frame synchronization pattern detecting circuit 41 and the state transition judging circuit 43 with timing shown in Fig. 6 (a3) and (b5). As a result, the frame synchronization detecting circuit, if it is in the hunting state 71, operates only when the receiving frame enable signal 52 is at logical "H" and if it is in the synchronization state, operates at all times.

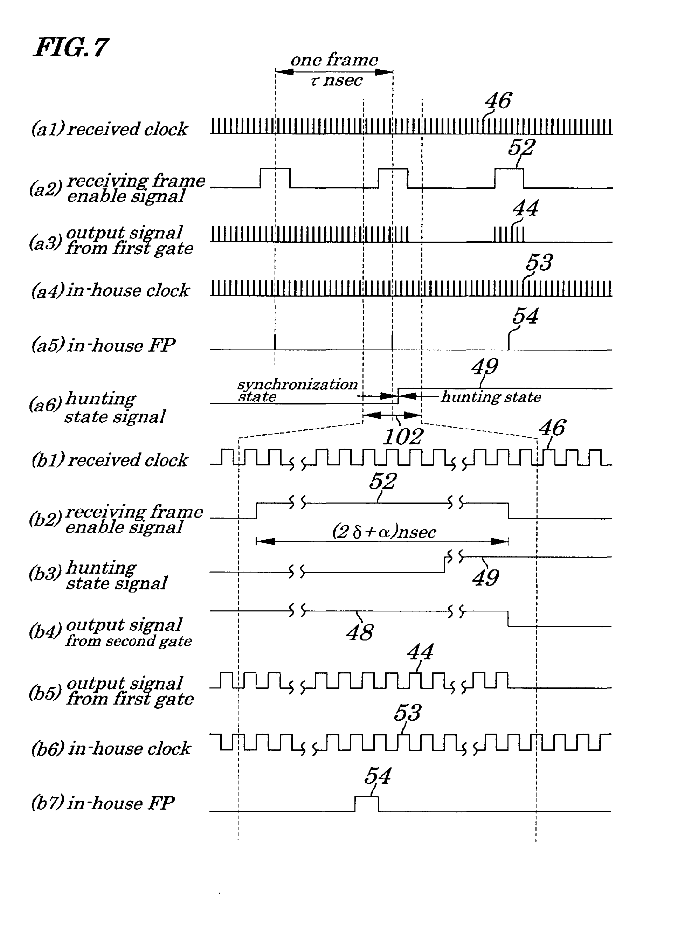

Figure 7 is a diagram showing an operating timing of a transition from a synchronization state to the hunting state 71 in the frame synchronization detecting circuit according to the first embodiment. Figure 7 (a1) shows an operating timing of the received clock 46. Figure 7 (a2) shows an operating timing of the receiving frame enable signal 52. Figure 7 (a3) shows an operating timing of the synchronization clock 44 which is an output signal from the first gate 45. Figure 7 (a4) shows an operating timing of the in-house clock 53. Figure 7 (a5) shows an operating timing of the in-house FP 54. Figure 7 (a6) shows an operating timing of the hunting state signal 49.

Figure 7 (b1) shows an enlarged view of an operating timing of the received clock 46 during a period 102. Figure 7 (b2) shows an enlarged view of an operating timing of the receiving frame enable signal 52 during the period 102. Figure 7 (b3) shows an enlarged view of an operating timing of the hunting state signal 49 during the period 102. Figure 7 (b4) shows an enlarged view of an operating timing of the output signal 48 from the second gate 47 during the period 102. Figure 7 (b5) shows an enlarged view of an operating timing of the synchronization clock 44 from the first gate 45 during the period 102. Figure 7 (b6) shows an enlarged view of an operating timing of the in-house clock 53 during the period 102. Figure 7 (b7) shows an enlarged view of an operating timing of the in-house FP 54 during the period 102.

That is, while the received clock 46 is input as shown in Fig. 7 (a1) and the in-house clock 53 and the in-house FP 54 are being produced with the timing shown in Fig. 7 (a4) and in Fig. 7 (a5), the in-house phase frame counter 51 produces the receiving frame enable signal 52 having a pulse width of "$2\delta + \alpha$" (nsec) in a timing manner that the in-house FP 54 rises at a midpoint of pulse width of the receiving frame enable signal 52 as shown in Fig. 7 (a2). During the period 102 shown in Fig. 7 (a6) and (b3), since the hunting state signal 49 causes the frame synchronization detecting circuit to make a transition from the synchronization state to the hunting state 71, the output signal 48 from the second gate 47 is output with the timing shown in Fig. 7 (b4). Therefore, while the output signal 48 is at logical "H", the synchronization clock 44 being an output signal from the first gate 45 is fed to the frame synchronization pattern detecting circuit 41 and the state transition judging circuit 43 with the timing shown in Fig. 7 (a3) and (b5). Therefore, while the output signal 48 is at logical "H", the synchronization clock 44 being an output signal from the first gate 45 is fed to the frame synchronization pattern detecting circuit 41 and the state transition judging circuit 43 with the timing shown in Fig. 6 (a3) and (b5). As a result, the frame synchronization detecting circuit, if it is in the hunting state 71, operates at all times and, if it is in the synchronization state, operates only when the receiving frame enable signal 52 is at logical "H".

Thus, the frame synchronization pattern detecting circuit 41 of the first embodiment is so configured that the in-house phase frame counter 51 is provided which is adapted to produce the receiving frame enable signal 52 having a pulse width of "$2\delta + \alpha$" (nsec) in a timing manner that the in-house FP 54 rises at a midpoint of pulse width of the receiving frame enable signal 52. Moreover, while the frame synchronization detecting circuit is in a hunting state 71 in which the frame synchronization pattern is being sought by the state transition judging circuit 43, only when the above receiving frame enable signal 52 is in an enable state, the synchronization clock 44 is fed to the frame synchronization pattern detecting circuit 41 and the state transition judging circuit 43. Since this allows the frame synchronization pattern detecting circuit 41 to operate only for the period of time of "$2\delta + \alpha$" (nsec) while the frame synchronization detecting circuit is in a hunting state 71, if one frame period is given as "$\tau$", a ratio of the operation period of the frame synchronization pattern detecting circuit 41 to the one frame period can be expressed as "$(2\delta + \alpha) / \tau$". In the case of an LSI (Large Scale Integrated Circuit) manufactured by a complementary metal-oxide semiconductor (CMOS) process in particular, since power consumption in the LSI is proportional to an operation frequency, it is possible, in the hunting state 71, to reduce power consumption to "$(2\delta + \alpha) / \tau$". For example, in an SDH system, if one frame period is 125 $\mu$ s, "$\delta$" is 150 (nsec) (which is equivalent to phase difference absorption of about 20 meters when being converted into a wire length for a printed circuit board) and margin "$\alpha$" is 200 (nsec), the "$(2\delta + \alpha) / \tau$" can be expressed by following equations:

$$2\delta + \alpha = 2 \times 150 + 200 (\text{nsec}) = 500 (\text{nsec}) = 0.5\ (\mu s) \tag{1}$$

$$0.5 (\mu s) / 125 (\mu s) = 0.004 = 0.4\% \tag{2}$$

This means that power consumption in the hunting state 71 can be reduced to 0.4%, thus enabling a great reduction of the power consumption. A result of a simulation conducted by the inventor of the present invention for actual operations of the frame synchronization pattern detecting circuit 41 shows that power consumption in a chip manufactured based on a standard cell of 0.25 ($\mu$m) process method can be reduced, in an operation at a hunting rate of 5%, from about 750 mW to about 256 mW.

Second Embodiment

In a frame synchronization pattern detecting circuit 41 of the first embodiment, by using an output signal 48 from a second gate 47 generated by a receiving frame enable signal 52 produced in an in-house phase frame counter 51 in response to a hunting state signal 49 fed from a state transition judging circuit 43, while the frame synchronization detecting circuit is in a hunting state 71 and while the receiving frame enable signal 52 is in a disable state, supply of a synchronization clock 44 is stopped by causing a first gate 45 to mask a received clock 46. The present invention is not limited to configuration shown in the above embodiment. In a frame synchronization detecting circuit of a second embodiment of the present invention, by masking not only the received clock 46 but also a reset signal 50 during a hunting period 71, power consumption is lowered more.

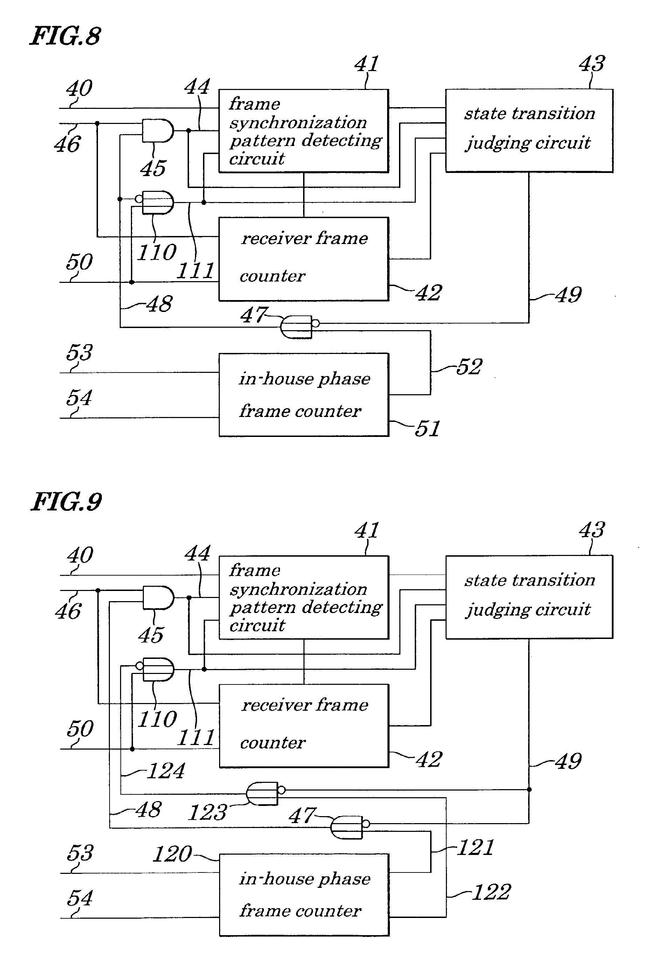

Figure 8 is the schematic block diagram showing configurations of a frame synchronization detecting circuit according to the second embodiment of the present invention. In Fig. 8, same reference numbers are assigned to parts having same function as in Fig. 1 and descriptions of them are omitted. The frame synchronization detecting circuit of the second embodiment is provided with the frame synchronization pattern detecting circuit 41, a receiver frame counter 42, the state transition judging circuit 43 and the in-house phase frame counter 51. The frame synchronization detecting circuit of the second embodiment differs from that of the first embodiment in that a third gate 110 is provided which is adapted to generate a mask reset signal 111 using the output signal 48 from the second gate 47 and the reset signal 50 and feeds it to the frame synchronization pattern detecting circuit 41 and the state transition judging circuit 43. The third gate 110 generates the mask reset signal 111 which is obtained by computing an OR of a NOT of the output signal 48 from the second gate 47 with the reset signal 50. Therefore, not only when the reset signal 50 is in an enable state but also when the receiving frame enable signal 52 produced by the in-house phase frame counter 51 is in a disable state during the hunting state 71, the mask reset signal 111 becomes in the enable state.

In the frame synchronization detecting circuit, in a hunting state 71, while the receiving frame enable signal 52 is in the disable state, there is a probability that an unexpected event may occur in which a register used to hold a state in the state transition judging circuit 43 does not work correctly due to some reasons such as noise, causing a transition of a state to occur internally. In the frame synchronization detecting circuit according to the first embodiment in particular, in order to lower power consumption in the hunting state 71, since supply of a clock is stopped, an operation of a checking circuit to check an abnormal transition is stopped, causing the frame synchronization detecting circuit to be placed in a deadlock state in which it does not make any transition irrespective of input signals in some cases. To solve this problem, in the frame synchronization detecting circuit according to the second embodiment, in the hunting state 71, while the receiving frame enable signal 52 is in a disable state, the frame synchronization pattern detecting circuit 41 and the state transition judging circuit 43 are forcedly initialized by the mask reset signal 111 produced by the third gate 110. That is, the frame synchronization detecting circuit of the second embodiment is so configured that it is additionally provided with the third gate 110 adapted to forcedly initialize the frame synchronization pattern detecting circuit 41 and the state transition judging circuit 43 not only while the reset signal 50 is in the enable state but also while the receiving frame enable signal 52 produced by the in-house phase frame counter 51 is in the disable state in the hunting state 71. By configuring as above, as is apparent from state transition diagram shown in Fig. 3, since the frame synchronization detecting circuit is placed in the hunting state 71 after the reset has been cancelled, even if such forced initialization is performed by using the mask reset signal 111, no trouble occurs in the frame synchronization pattern detecting circuit 41 and, for example, the deadlock state caused by incorrect operations due to noise or a like can be prevented even when supply of the clock is stopped, thus allowing efficient reduction of power consumption during the hunting period 71.

Third Embodiment

In the frame synchronization detecting circuit according to the above second embodiment, in a hunting state, when a receiving frame enable signal 52 is in a disable state, a stop of supply of the synchronization clock 44 to the frame synchronization pattern detecting circuit 41 and a state transition judging circuit 43 and a forced initialization by using a mask reset signal 111 are performed with same timing. The present invention is not limited to configuration of the above embodiment. In a frame synchronization detecting circuit according to a third embodiment, a stop of supply of the synchronization clock 44 to the frame synchronization pattern detecting circuit 41 and to the state transition judging circuit 43 and forced initialization by using the mask reset signal 111 are performed with different timing.

Figure 9 is a schematic block diagram showing configurations of the frame synchronization pattern detecting circuit according to the third embodiment of the present invention. In Fig. 9, same reference numbers are assigned to parts having same functions as in the second embodiment shown in Fig. 8 and descriptions of them are omitted accordingly. As shown in Fig. 9, the frame synchronization pattern detecting circuit of the third embodiment is provided with the frame synchronization pattern detecting circuit 41, the state transition judging circuit 43 and a receiver frame counter 42. The frame synchronization pattern detecting circuit of the third embodiment differs from that of the second embodiment in that, in an in-house phase frame counter 120, both a first receiving frame enable signal 121 having a pulse width of "2 $\delta$ + $\alpha$" (nsec) in a timing manner that an in-house FP 54 rises at a midpoint of pulse width of the first receiving frame enable signal 121 and a second receiving frame enable signal 122 having a pulse width of " 2 $\delta$ + $\alpha$' " (nsec) in a timing manner that the in-house FP 54 rises at a midpoint of pulse width of the second receiving frame enable signal 122 are produced in synchronization with an in-house clock 53. The $\alpha$' is a margin to be decided with considerations given to circuit accuracy and delay variations of the circuit.

The frame synchronization pattern detecting circuit of the third embodiment is provided with a fourth gate 123 adapted to produce an output signal 124 which is obtained by computing an OR of the second receiving frame enable signal 122 with a NOT of a hunting state signal 49 output from the state transition judging circuit 43. The output signal 124 is fed to the third gate 110. That is, even when the hunting state signal 49 is high, since the output signal 124 from the fourth gate 123 is fed as a signal being at logical "H" to the third gate 110 during a period of "2 $\delta$ + $\alpha$' " (nsec) for which the second receiving frame enable signal 122 is in an enable state, the frame synchronization pattern detecting circuit 41 and state transition judging circuit 43 are initialized in response to a reset signal 50. Moreover, when the frame synchronization detecting circuit is in a hunting state and the second receiving frame enable signal 122 is in a disable state, since the output signal 124 is fed as a signal being at logical "L" to the third gate 110, the frame synchronization pattern detecting circuit 41 and the state transition judging circuit 43 are forcedly initialized by the mask reset signal 111. Furthermore, even when the frame synchronization detecting circuit is not in the hunting state and the second receiving frame enable signal 122 is in the enable state, since the output signal 124 from the fourth gate 123 is fed as a signal being at logical "H" to the third gate 110, the reset signal 50 is fed, as it is, to the frame synchronization pattern detecting circuit 41 and the state transition judging circuit 43.

A second gate 47 produces an output signal 48 which is obtained by computing an OR of a first receiving frame enable signal 121 with a NOT of the hunting state signal 49 output from the state transition judging circuit 43. That is, even when the hunting state signal 49 is high, since the output signal 48 is fed as a signal being at logical "H" to a first gate 45 during the period of "2 $\delta$ + $\alpha$" (nsec) for which the first receiving enable signal 121 is in an enable state, a received clock 46 is fed, as it is, to the frame synchronization pattern detecting circuit 41 and the state transition judging circuit 43. Even when the hunting state signal 49 is low and the first receiving frame enable signal 121 is in a disable state, since the output signal 48 from the second gate 47 is fed as a signal being at logical "H" to the first gate 45, the received clock 46 is fed, as it is, to the frame synchronization pattern detecting circuit 41 and the state transition judging circuit 43. On the other hand, when the hunting state signal 49 is high and the first receiving frame enable signal 121 is in a disable state, since the output signal 48 from the second gate 47 is fed as a signal being at logical "L" to the first gate 45, the received clock 46 is not fed to the frame synchronization pattern detecting circuit 41 and the state transition judging circuit 43, causing the frame synchronization pattern detecting circuit 41 to be placed in a stop state.

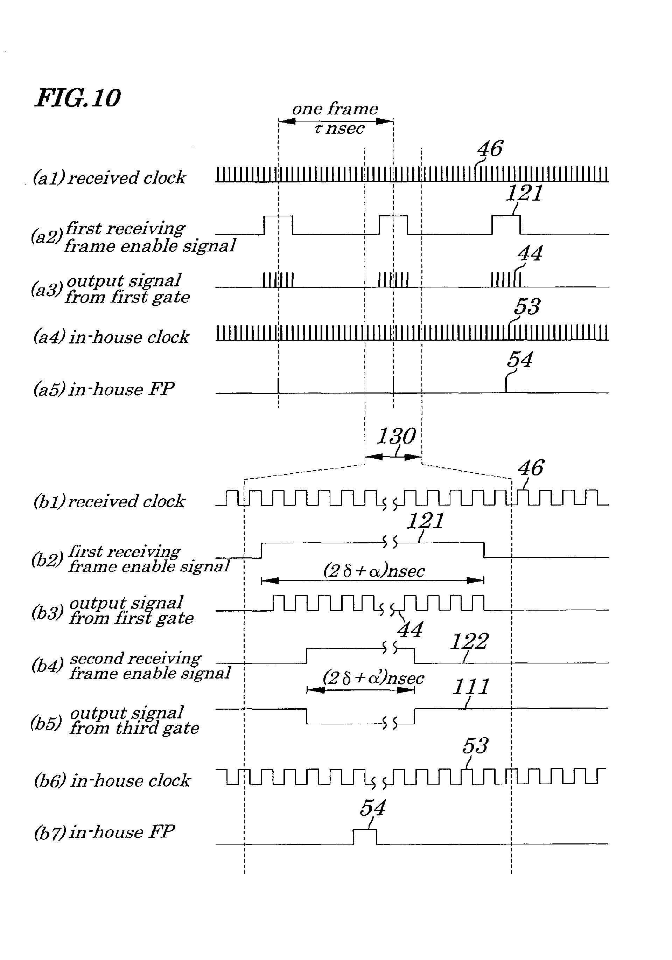

Figure 10 is a diagram showing an operating timing in a case where a reset period is provided within a clock stopping period in the hunting state in the frame synchronization detecting circuit of the third embodiment. Figure 10 (a1) shows an operating timing of the received clock 46. Figure 10 (a2) shows an operating timing of the first receiving frame enable signal 121. Figure 10 (a3) shows an operating timing of the synchronization clock 44 being an output from the first gate 45. Figure 10 (a4) shows an operating timing of the in-house clock 53. Figure 10 (a5) shows an operating timing of the in-house FP 54.

Figure 10 (b1) shows an enlarged view of an operating timing of the received clock 46 during a period 130. Figure 10 (b2) shows an enlarged view of an operating timing of the first receiving frame enable signal 121 during the period 130. Figure 10 (b3) is an enlarged view of an operating timing of the synchronization clock 44 being the output signal from the first gate 45 during the period 130. Figure 10 (b4) shows an enlarged view of an operating timing of the second receiving frame enable signal 122 during the period 130. Figure 10 (b5) shows an enlarged view of an operating timing of the mask reset signal 111 output from the third gate 110 during the period 130. Figure 10 (b6) shows an enlarged view of an operating timing of an in-house clock 53 during the period 130. Figure 10 (b7) shows an enlarged view of an operating timing of an in-house FP 54 during the period 130.

That is, when the received clock 46 is input as shown in Fig. 10 (a1) and while the in-house clock 53 and the in-house FP 54 are being produced with the timing shown in Fig. 10 (a4) and (a5), the in-house phase frame counter 120 produces the first receiving frame enable signal 121 having a pulse width of "2 $\delta$ + $\alpha$" (nsec) in a timing manner that the in-house FP 54 rises at a midpoint of pulse width of the first receiving frame enable signal 121 and the second receiving frame enable signal 122 having a pulse width of " 2 $\delta$ + $\alpha$' " (nsec) in a timing manner that the in-house FP 54 rises at a midpoint of pulse width of the second receiving frame enable signal 122, as shown in Fig. 10 (b2) and (b4). Therefore, during the period 130 in a hunting state, while the first receiving frame enable signal 121 is in an enable state, the synchronization clock 44 being an output from the first gate 45 is output as shown in Fig. 10 (b3) and while the second receiving frame enable signal 122 is in a disable state, the mask reset signal 111 is output as shown in Fig. 10 (b5). As a result, while the frame synchronization detecting circuit is in a hunting state, when the first receiving frame enable signal 121 is in a disable state, no clock is fed to the frame synchronization pattern detecting circuit 41 and the

**EP 1 117 201 A2**

state transition judging circuit 43 and when the second receiving frame enable signal 122 is in a disable state, the frame synchronization pattern detecting circuit 41 and the state transition judging circuit 43 are initialized. Moreover, during the period 130, since a reset is cancelled after a clock has been fed to the frame synchronization pattern detecting circuit 41 and the state transition judging circuit 43, stable operations for detection of frame synchronization can be achieved.

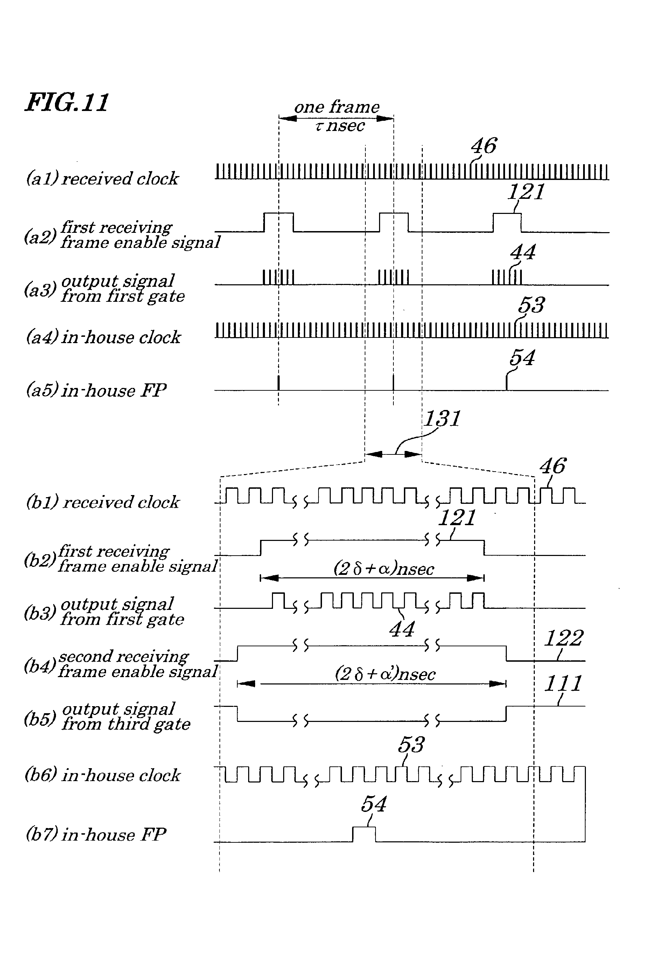

Figure 11 is a diagram showing an operating timing in a case where a clock stopping period is provided within a reset period in a hunting state in the frame synchronization detecting circuit according to the third embodiment. Figure 11 (a1) shows an operating timing of the received clock 46. Figure 11 (a2) shows an operating the first receiving frame enable signal 121. Figure 11 (a3) shows an operating timing of the synchronization clock 44 being an output of the first gate 45. Figure 11 (a4) shows an operating timing of the in-house clock 53. Figure 11 (a5) shows an operating timing of the in-house FP 54.

Figure 11 (b1) shows an enlarged view of an operating timing of the received clock 46 during a period 131. Figure 11 (b2) shows an enlarged view of an operating timing of the first receiving frame enable signal 121 during the period 131. Figure 11 (b3) shows an enlarged view of an operating timing of the synchronization clock 44 being the output from the first gate 45 during the period 131. Figure 11 (b4) shows an enlarged view of an operating timing of the second receiving frame enable signal 122 during the period 131. Figure 11 (b5) shows an enlarged view of an operating timing of the mask reset signal 111 output by the third gate 110. Figure 11 (b6) showsanenlargedviewofanoperatingtimingofthein-house clock 53 during the period 131. Figure 11 (b7) shows an enlarged view of an operating timing of the in-house FP 54 during the period 131.

That is, as is the case in Fig. 10, when the received clock 46 is input as shown in Fig. 11 (a1) and while the in-house clock 53 and the in-house FP 54 are being produced with timing shown in Fig. 11 (a4) and (a5), the in-house phase frame counter 120 produces the first receiving frame enable signal 121 having a pulse width of "2 $\delta + \alpha$" (nsec) in a timing manner that the in-house FP 54 rises at a midpoint of the pulse width of the first receiving frame enable signal 121 and the second receiving frame enable signal 122 having a pulse width of "2 $\delta + \alpha'$ " (nsec) in a timing manner that the in-house FP 54 rises at a midpoint of pulse width of the second receiving frame enable signal 121, as shown in Fig. 11 (b2) and (b4) . Therefore, during the period 131 and in a hunting state, while the first receiving frame enable signal 121 is in an enable state, the synchronization clock 44 being the output signal from the first gate 45 is output as shown in Fig. 11 (b3) and while the second receiving frame enable signal 122 is in a disable state, the mask reset signal 111 is output as shown in Fig. 11 (b5).

As a result, while the frame synchronization detecting circuit is in the hunting state, when the first receiving frame enable signal 121 is in the disable state, no clock is fed to the frame synchronization pattern detecting circuit 41 and the state transition judging circuit 43 and, when the second receiving frame enable signal 122 is in a disable state, the frame synchronization pattern detecting circuit 41 and the state transition judging circuit 43 are initialized. Moreover, during the period 131, since a clock is fed to the frame synchronization pattern detecting circuit 41 and the state transition judging circuit 43, number of clocks required during a period from a start of a frame synchronization detecting operation to a detection of a frame synchronization pattern can be reduced.

The above effect can be also obtained by producing the first receiving frame enable signal 121 and second receiving frame enable signal 122 being able to provide timing with which the frame synchronization detecting circuit 41 and the state transition judging circuit 43 are initialized after supply of a clock has been stopped and initialization is cancelled after the supply of a clock has been started. Moreover, a same effect as above can be also obtained by producing the first receiving frame enable signal 121 and second receiving frame enable signal 122 being able to provide timing with which the frame synchronization pattern detecting circuit 41 and the state transition judging circuit 43 are initialized before the supply of a clock is stopped and the initialization is cancelled before the supply of a clock is started. In addition, nine types of combinations of timing including a case where both the supply of a clock and the initialization are simultaneously controlled are possible to implement the present invention and the same effect as above can be achieved by selecting any one of the timing combinations.

As described above, the frame synchronization pattern detecting circuit 41 of the third embodiment is so configured that its in-house phase frame counter 120 is adapted to produce the first receiving frame enable signal 121 and second receiving frame enable signal 122 each operating with different timing and each having control over a start and/or stop of the supply of a clock to the frame synchronization pattern detecting circuit 41 and the state transition judging circuit 43 and over the initialization of them with different timing. This makes it possible to provide a frame synchronization pattern detecting circuit 41 capable of performing appropriate and optimum operations, for example, of stable detection of frame synchronization that can be implemented by initialization made after the supply of a clock has been started or of prompt detection of the frame synchronization that can be achieved by starting the clock supply after the reset has been cancelled.

13

Fourth Embodiment

In a frame synchronization pattern detecting circuit of the first to third embodiments, as described above, an in-house phase frame counter is provided which is adapted to produce a receiving frame enable signal having a pulse width of "2 $\delta$ + $\alpha$" (nsec) in a timing manner that an in-house FP rises at a midpoint of a pulse width of the receiving frame enable signal and, with timing specified by the receiving frame enable signal, supply of a clock is stopped or a circuit itself is forcedly initialized to reduce power consumption in a hunting state. The present invention is not limited to configurations as shown in these embodiments. In a frame synchronization pattern detecting circuit of a fourth embodiment, a supply of a clock is not stopped and received data itself is made fixed.

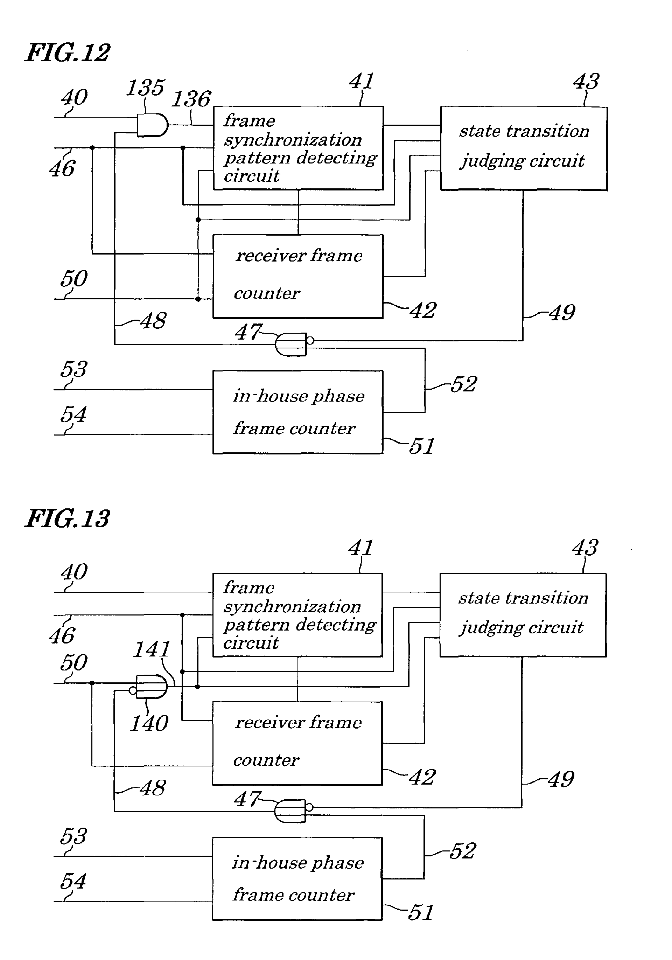

Figure 12 is a schematic block diagram showing configurations of the frame synchronization pattern detecting circuit according to the fourth embodiment. In Fig. 12, same reference numbers are assigned to parts having a same function as in the first embodiment shown in Fig. 1 and descriptions of them are omitted accordingly. The frame synchronization pattern detecting circuit of the fourth embodiment is provided with a frame synchronization pattern detecting circuit 41, a receiver frame counter 42, a state transition judging circuit 43 and an in-house phase frame counter 51. The frame synchronization pattern detecting circuit of the fourth embodiment differs from that of the first embodiment in that it has a fifth gate 135 adapted to feed a mask data signal 136 obtained by computing an AND of an output signal 48 from a second gate 47 with received data signal 40 to the frame synchronization pattern detecting circuit 41. Therefore, unlike in a case of the first embodiment, to the frame synchronization pattern detecting circuit 41 and a state transition judging circuit 43 is directly input a received clock 46.

That is, even when a hunting state signal 49 is high, during a period of "2 $\delta$ + $\alpha$" (nsec) for which a receiving frame enable signal 52 is in an enable state, since the output signal 48 output by the second gate 47 is supplied as a signal at logical "H" to the fifth gate 135, the received data signal 40 is supplied, as it is, to the frame synchronization pattern detecting circuit 41 and to the state transition judging circuit 43. Moreover, even when the hunting state signal 49 is low and even while the receiving frame enable signal 52 is in a disable state, the output signal 48 from the second gate 47 is fed as a signal being at logical "H" to the fifth gate 135, the received data signal 40 is supplied, as it is, to the frame synchronization pattern detecting circuit 41 and the state transition judging circuit 43. On the other hand, while the hunting state signal 49 is high and the receiving frame enable signal 52 is in the disable state, since the output signal 48 from the second gate 47 is fed as a signal being at logical "L" to the fifth gate 135, the received data signal 40 being fixed to be at logical "L" is fed to the frame synchronization pattern detecting circuit 41 and the state transition judging circuit 43.

Thus, in the frame synchronization detecting circuit according to the fourth embodiment, when it is in a hunting state, synchronization data is fed to the frame synchronization pattern detecting circuit 41 and the state transition judging circuit 43 only when the receiving frame enable signal 52 is in the enable state and, when the hunting state signal 49 is high and the receiving frame enable signal 52 is in the disable state, received data 40 is made fixed. As a result, though power consumption in combined circuits employed in the frame synchronization pattern detecting circuit of the fourth embodiment in which received data signal 40 is made fixed, is reduced to almost "0" (zero), since clock lines of flip-flops used in shift registers in the frame synchronization pattern detecting circuit 41 and/or state registers in the state transition judging circuit 43 are operated at all times, the power consumption is lowered less compared with the case in the first embodiment. However, since verification of timing is performed in accordance with the received clock 46 fed from such clock lines, no gate is inserted into the clock lines, which serves to simplify verification of timing in a circuit design process and/or a layout verifying process, to reduce time required for the verification of timing and to improve verification accuracy.

Fifth Embodiment

In a frame synchronization pattern detecting circuit of the fourth embodiment, a supply of a clock is not stopped and received data itself is made fixed. However, the present invention is not limited to configurations of the above embodiment. In a frame synchronization pattern detecting circuit of a fifth embodiment, a supply of a clock is not stopped and an operation of an entire circuit is stopped by resetting.

Figure 13 is a schematic block diagram showing configurations of the frame synchronization pattern detecting circuit according to the fifth embodiment of the present invention. In Fig. 13, same reference numbers are assigned to parts having a same function as in the fourth embodiment shown in Fig. 12 and descriptions of them are omitted accordingly. The frame synchronization pattern detecting circuit of the fifth embodiment is provided with a frame synchronization pattern detecting circuit 41, a receiver frame counter 42, a state transition judging circuit 43 and an in-house phase frame counter 51.

The frame synchronization pattern detecting circuit of the fifth embodiment differs from that of the fourth embodiment in that it has a sixth gate 140 adapted to feed a mask reset signal 141 obtained by computing an OR of a NOT of an output signal 48 of a second gate 47 with a reset signal 50 to the frame synchronization pattern detecting circuit 41 and the state transition judging circuit 43. That is, even when a hunting state signal 49 is high, during a period of "2 δ + α" (nsec) for which a receiving frame enable signal 52 is in an enable state, since the output signal 48 output by the second gate 47 is supplied as a signal at logical "H" to the sixth gate 140, the frame synchronization pattern detecting circuit 41 and the state transition judging circuit 43 are reset in response to the reset signal 50. Moreover, even when the hunting state signal 49 is low and even while the receiving frame enable signal 52 is in a disable state, the output signal 48 from the second gate 47 is fed as a signal being at logical "H" to the sixth gate 140, the frame synchronization pattern detecting circuit 41 and the state transition judging circuit 43 are reset in response to the reset signal 50. On the other hand, when the hunting state signal 49 is high and while the receiving frame enable signal 52 is in the disable state, the output signal 48 from the second gate 47 is fed as a signal being at logical "L" to the sixth gate 140, the frame synchronization pattern detecting circuit 41 and the state transition judging circuit 43 are forcedly reset by the mask reset signal 141.

Thus, in the frame synchronization detecting circuit according to the fifth embodiment, while the hunting state signal 49 is high and the receiving frame enable signal 52 is in the disable state, the frame synchronization pattern detecting circuit 41 and the state transition judging circuit 43 are forcedly reset. As a result, though power consumption in combined circuits employed in the frame synchronization pattern detecting circuit of the fifth embodiment is reduced to almost "0" (zero), since clock lines of flip-flops used in shift registers in the frame synchronization pattern detecting circuit 41 and/or state registers in the state transition judging circuit 43 are operated at all times, the power consumption is lowered less compared with a case in the first embodiment. However, since verification of timing is performed in accordance with a received clock 46 fed from such clock lines, no gate is inserted into the clock lines, which serves to simplify the verification of timing in a circuit design process and/or a layout verifying process, to reduce time required for the verification and to improve verification of timing accuracy.


Sixth Embodiment


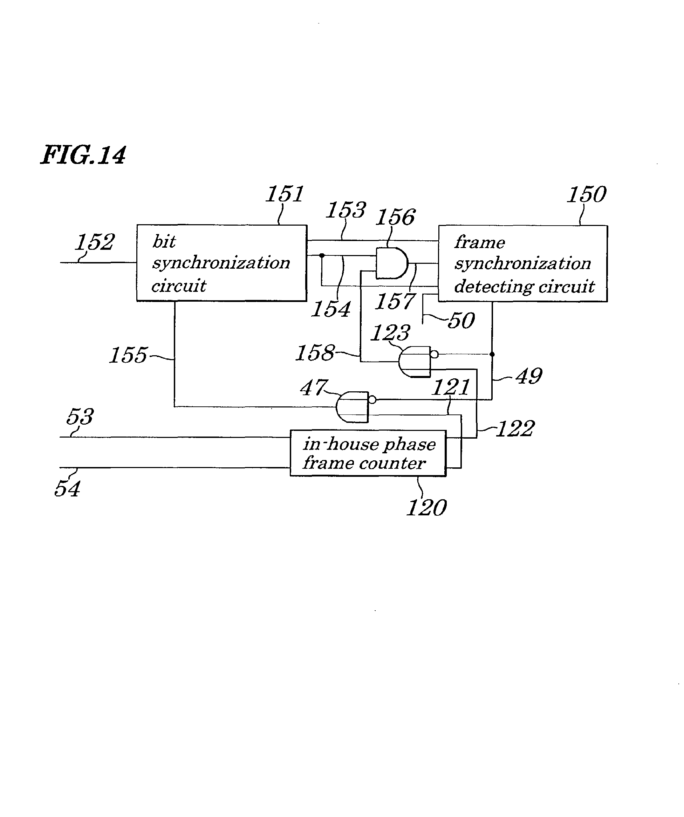

In a frame synchronization pattern detecting circuit of the first to the fifth embodiments, power consumption is lowered by controlling operations. The present invention is not limited to configurations of the above embodiments. That is, according to a sixth embodiment, the power consumption is lowered by controlling stop operations of a bit synchronization circuit connected to a front stage of the frame synchronization detecting circuit. Figure 14 is a schematic block diagram showing configurations of the frame synchronization detecting system in which the frame synchronization detecting circuit according to the sixth embodiment of the present invention is employed. In the sixth embodiment, the frame synchronization detecting system is provided with a bit synchronization circuit 151, a frame synchronization detecting circuit 150 having a frame synchro-nization pattern detecting circuit 41, a receiver frame counter 42 and a state transition judging circuit 43 (as shown respectively in Fig. 12), each having same functions as in the third embodiment and with an in-house phase frame counter 120 having same functions as in the third embodiment. To the front stage of the frame synchronization detecting system is connected the bit synchronization circuit 151. The bit synchronization circuit 151 extracts data 153 and a clock 154 contained in received data 152. An enable signal 155 is input to the bit synchronization circuit 151 and stop operations inside of the bit synchronization circuit 151 are controlled by the enable signal 155. The data 153 extracted in the bit synchronization circuit 151 is fed to the frame synchronization detecting circuit 150 as received data 40. The clock 154 extracted in the bit synchronization circuit 151 is fed to the frame synchronization detecting circuit 150 to be used as a received clock 46 for the receiver frame counter 42 and simultaneously to a seventh gate 156. An output signal 157 from the seventh gate 156 is input to the frame synchronization detecting circuit 150 to be used as a clock signal for the frame synchronization pattern detecting circuit 41 and the state transition judging circuit 43 (as shown respectively in Fig. 12).

The frame synchronization detecting circuit 150 produces a hunting state signal 49 as described above and feeds it to a second gate 47 and to a fourth gate 123. The second gate 47 produces the enable signal 155 obtained by computing an OR of a first receiving frame enable signal 121 output from the in-house phase frame counter 120 with a NOT of the hunting state signal 49. The fourth gate 123 produces an output signal 158 obtained by computing an OR of a second receiving frame enable signal 122 output from the in-house phase frame counter 120 with the hunting state signal 49. The output signal 158 is input to the seventh gate 156. The seventh gate 156 produces the output signal 157 obtained by computing an AND of the clock 154 with the output signal 158.

With the sixth embodiment, power consumption is lowered by stopping an operation itself of the bit synchro-nization circuit 151 depending on a state of each of the first receiving frame enable signal 121 and second receiving frame enable signal 122 in a hunting state or by masking the clock 154 to be fed to the frame synchronization detecting circuit 150 in a hunting state. By causing the operation of the bit synchronization circuit 151 to be started by the enable signal 155 after having cancelled masking of the clock 154 by the output signal 158, a clock signal becoming weak immediately after the clock signal has risen can be removed, thus enabling a stable operation of the system.

Moreover, the frame synchronization detecting circuit according to any one of the first to fifth embodiments in which the supply of a clock is stopped within the frame synchronization detecting circuit, a reset is controlled and/or received data is fixed, may be also used as the frame synchronization detecting circuit 150 of the sixth embodiment.

Furthermore, power consumption can be reduced more by combining two or more of functions described in the first to sixth embodiments including controls on a stop of the supply of clocks, resetting, fixation of received data and/or stop of operations of the bit synchronization circuit 151 itself.

Also, power consumption can be lowered by causing the stop of clock supply and/or resetting to be controlled only at an inside part of the frame synchronization detecting circuit 43, for example, only in the state transition judging circuit. Which combinations of the above functions are employed or which part of the frame synchronization detecting circuit the above functions are to be applied to can be selected depending on applications for using the frame synchronization detecting circuit.

It is apparent that the present invention is not limited to the above embodiments but may be changed and modified without departing from the scope and spirit of the invention.

**Claims**

1. A frame synchronization detecting circuit characterized by comprising:

   a frame synchronization pattern detecting means (41) for detecting, with specified timing, a predetermined frame synchronization pattern contained in received data (40) having a frame structure;
   a hunting state judging means (43) for judging whether said frame synchronization detecting circuit is in a hunting state in which said predetermined frame synchronization pattern is being sought, based on a detection result obtained by said frame synchronization pattern detecting means (41); and
   a timing stopping means (47, 45) for stopping said timing of detecting said predetermined frame synchronization pattern only for a specified period of time before and after a frame pulse is generated which indicates a head of a frame containing said received data (40) when said frame synchronization detecting circuit is judged to be in said hunting state by said hunting state judging means (43).

2. The frame synchronization detecting circuit according to Claim 1, characterized by further comprising a resetting means (110, 123) for resetting frame synchronization detecting operations to be performed by said frame synchronization pattern detecting means (41) and said hunting state judging means (43) at a time other than said specified period of time before and after said frame pulse is generated when said frame synchronization detecting circuit is judged to be in said hunting state by said hunting state judging means (43).

3. The frame synchronization detecting circuit according to Claim 2, characterized in that said stopping by said timing stopping means (47, 45) and said resetting by said resetting means (110, 123) are performed with different timing.

4. A frame synchronization detecting circuit characterized by comprising:

   a frame synchronization pattern detecting means (41) for detecting a predetermined frame synchronization pattern contained in received data (40) having a frame structure;
   a hunting state judging means (43) for judging whether said frame synchronization detecting circuit is in a hunting state in which said predetermined frame synchronization pattern is being sought, based on a detection result obtained by said frame synchronization pattern detecting means (41); and
   a received data fixing means (135) for making said received data (40) fixed only for a specified period of time before and after a frame pulse is generated which indicates a head of a frame containing said received data (40) when said frame synchronization detecting circuit is judged to be in said hunting state by said hunting state judging means (43).

5. A frame synchronization detecting circuit characterized by comprising:

   a frame synchronization pattern detecting means (41) for detecting a predetermined frame synchronization pattern contained in received data (40) having a frame structure;
   a hunting state judging means (43) for judging whether said frame synchronization detecting circuit is in a hunting state in which said predetermined frame synchronization pattern is being sought, based on a detection result obtained by said frame synchronization pattern detecting means (41); and
   a resetting means (110, 123) for resetting frame synchronization detecting operations to be performed by said frame synchronizationpatterndetectingmeans (41) andsaidhuntingstate judging means (43) at a time other than said specified period of time before and after said frame pulse is generated when said frame synchronization detecting circuit is judged to be in said hunting state by said hunting state judging means (43).

6.  A frame synchronization detecting circuit characterized by comprising:

    a frame synchronization pattern detecting means (41) for detecting a predetermined frame synchronization pattern contained in received data (40) having a frame structure;
    a hunting state judging means (43) for judging whether said frame synchronization detecting circuit is in a hunting state in which said predetermined frame synchronization pattern is being sought, based on a detection result obtained by said frame synchronization pattern detecting means (41); and
    a circuit stop controlling means (45, 47) for stopping an operation of a circuit connected to a front stage only for a specified period of time before and after a frame pulse is generated when said frame synchronization detecting circuit is judged to be in said hunting state by said hunting state judging means (43).

7.  The frame synchronization detecting circuit according to Claim 6, characterized in that said circuit stop controlling means (45,47), when canceling a stop of operations of said circuit, cancels said stop of operations of said circuit connected to said front stage after it has canceled a stop of timing of frame synchronization detection operations.

8.  A frame synchronization detecting circuit characterized by comprising:

    a frame synchronization pattern detecting means (41) for detecting a predetermined frame synchronizationpattern contained in received data (40) having a frame structure;
    a hunting state judging means (43) for judging whether said frame synchronization detecting circuit is in a hunting state in which said predetermined frame synchronization pattern is being sought, based on a detection result obtained by said frame synchronization pattern detecting means (41); and
    a circuit operation stopping means (151) for stopping operations of, at least, a part of said frame synchronization detecting circuit only for a specified period of time before and after a frame pulse is generated which indicates a head of a frame containing said received data (40) when said frame synchronization detecting circuit is judged to be in said hunting state by said hunting state judging means (43).

## FIG.1

## FIG.2

FIG.3

EP 1 117 201 A2

75

reset

70

76 cancelation of reset

71

detection of matching of synchronization pattern

reset state

hunting state

77 reset

non-matching of synchronization pattern is detected a number of times of "m"

86

82

78

83

73

reset

detection of non-matching of synchronization pattern

72

74

front protection state

81

rear protection state

matching of synchronization pattern is detected a number of times of (n-1) or less

79

reset

84

85

80

matching of synchronization pattern is detected a number of times of "n"

matching of synchronization pattern is detected

non-matching of synchronization pattern is detected a number of times of "m-1" or less

FIG.4

# FIG.5

one frame
τ nsec

(a1) received clock                                46

(a2) receiving frame enable signal                 52

(a3) output signal from first gate                 44

(a4) in-house clock                                53

(a5) in-house FP                                   54

(a6) hunting state signal    "H"        100        49
                             "L"

46

(b1) received clock                                46

(b2) receiving frame enable signal                 52

(2 δ+α)nsec

(b3) output signal from second gate                48

(b4) output signal from first gate                 44

(b5) in-house clock                                53

(b6) in-house FP                                   54

EP 1 117 201 A2

# FIG.6

EP 1 117 201 A2

## FIG. 7

| (a1) | received clock | | 46 |
| (a2) | receiving frame enable signal | | 52 |
| (a3) | output signal from first gate | | 44 |
| (a4) | in-house clock | | 53 |
| (a5) | in-house FP | | 54 |
| (a6) | hunting state signal | synchronization state / hunting state | 49 |
| (b1) | received clock | 102 | 46 |
| (b2) | receiving frame enable signal | (2δ+α)nsec | 52 |
| (b3) | hunting state signal | | 49 |
| (b4) | output signal from second gate | 48 | |
| (b5) | output signal from first gate | | 44 |
| (b6) | in-house clock | | 53 |
| (b7) | in-house FP | | 54 |

one frame τ nsec

FIG.8

FIG.9

EP 1 117 201 A2

## FIG.10

(a1) received clock

(a2) first receiving frame enable signal

(a3) output signal from first gate

(a4) in-house clock

(a5) in-house FP

130

(b1) received clock

(b2) first receiving frame enable signal

(b3) output signal from first gate

(b4) second receiving frame enable signal

(b5) output signal from third gate

(b6) in-house clock

(b7) in-house FP

one frame
$\tau$ nsec

$(2\delta + \alpha)$nsec

$(2\delta + \alpha')$nsec

## FIG.11

one frame
τ nsec

(a1) received clock
46

(a2) first receiving frame enable signal
121

(a3) output signal from first gate
44

(a4) in-house clock
53

(a5) in-house FP
54

131

(b1) received clock
46

(b2) first receiving frame enable signal
121
$(2\delta + \alpha)$ nsec

(b3) output signal from first gate
44

(b4) second receiving frame enable signal
122
$(2\delta + \alpha')$ nsec

(b5) output signal from third gate
111

(b6) in-house clock
53

(b7) in-house FP
54

EP 1 117 201 A2

**FIG.12**

**FIG.13**

## FIG.14

FIG.15 (PRIOR ART)

$16_1$;photoelectrical converting section

$20_1$;pointer position changing section

$13$;cross-connect board

$10_1$

$14_1$ $17_1$ $18_1$

$25_1$

$15_1$ $19_1$

$24$

$11_1$;first IF board

$16_2$ $14_2$ $17_2$ $18_2$ $20_2$

$10_2$

$25_2$

$15_2$ $19_2$

$11_2$;second IF board

$17_3$;SOH terminating section

$16_3$ $14_3$ $18_3$ $20_3$

$10_3$

$25_3$

$15_3$ $19_3$

$11_3$;third IF board

cross-connect section

reference signal generating board

$21$

$22$

$12$

reference signal generating section

$23$

EP 1 117 201 A2

**FIG.16** *(PRIOR ART)*

$26_1$;bit synchronization circuit

$27_1$;frame synchronization
detecting circuit

$28_1$;FIFO circuit

$25_1$

$30_1$

$32_1$

$29$

$31_1$

$33_1$

$25_2$

$26_2$

$30_2$

$27_2$

$32_2$

$28_2$

$31_2$

$33_2$

function section

$25_3$

$26_3$

$30_3$

$27_3$

$32_3$

$28_3$

$31_3$

$33_3$

$22$

$23$

$24$;cross-connect section

30

## FIG.17 (PRIOR ART)

(a) received clock

(b1) FP of first IF board

(b2) FP of second IF board

(b3) FP of third IF board

(b4) in-house FP

(c1) FP of first IF board

(c2) FP of second IF board

(c3) FP of third IF board

(c4) in-house FP

one frame
$\tau$ nsec

35    35    35

$(2\delta)$nsec

(d) in-house clock

(e1) FP of first IF board

(e2) FP of second IF board

(e3) FP of third IF board

(e4) in-house FP